# EUROPEAN PATENT SPECIFICATION

(11) **EP 2 301 045 B1**
(45) Date of publication and mention of the grant of the patent: **20.02.2013**
(21) Application number: 09770796.2
(22) Date of filing: 18.06.2009
(51) Int. Cl.: H01B 5/10, B29C 70/52, B29B 15/12, B29B 15/14

(54) **PULTRUSION PROCESS FOR THE MANUFACTURE OF FIBER REINFORCED COMPOSITES**
STRANGZIEHVERFAHREN ZUR HERSTELLUNG VON FASERVERSTÄRKTEN VERBUNDSTOFFEN
PROCÉDÉ DE PULTRUSION POUR FABRIQUER DES COMPOSITES RENFORCÉS PAR DES FIBRES

(30) Priority: 27.06.2008 US 76223 P
(43) Date of publication of application: 30.03.2011
(73) Proprietor: Union Carbide Chemicals & Plastics Technology LLC, Midland, MI 48674 (US)
(72) Inventor: CHEN, Buo, Hillsborough NJ 08844 (US)
(74) Representative: Hayes, Adrian Chetwynd
(86) International application number: PCT/US2009/047744
(87) International publication number: WO 2009/158262

(56) References cited:
- EP-A- 0 455 149
- EP-A- 0 752 306
- WO-A-2005/040017
- WO-A-2005/089410
- GB-A- 2 208 504
- US-A- 3 917 774
- US-A- 3 993 726
- US-A- 4 939 002
- US-A1- 2002 071 907
- US-B2- 7 060 326

## Description

### FIELD OF THE INVENTION

This invention relates to fiber reinforced composites. In one aspect, the invention relates to a pultrusion process for fiber reinforced composites while in another aspect, the invention relates to the wet-out step of such a process. In yet another aspect, the invention relates to a pultrusion process in which the wet-out step employs a highly reactive epoxy resin system applied with a high-pressure spray nozzle while in still another aspect, the invention relates to such a wet-out step in which the filaments of the fiber are spread apart from one another before the resin system is applied.

### BACKGROUND OF THE INVENTION

The current bare aluminium conductor overhead cable such as aluminium conductor steel reinforced (ACSR), or aluminium core steel supported (ACSS), cable are constructed with a steel core to carry their weight (e.g., USP 3,813,481). Alternatively, the steel core can be replaced with a fiber reinforced polymeric composite to produce an aluminium conductor composite core (ACCC) reinforced cable (e.g., USP 7,015,395 and 7,060,326). ACCC cable can provide advantages over ACSR cable in terms of weight and strength.

US-B-7,060,326 relates to an aluminium conductor composite core reinforced cable (ACCC) and method of manufacture. The composite core for an aluminium conductor composite core reinforced cable comprising: a) a plurality of fibers from at least one fiber type embedded in one or more matrix materials; and b) wherein the composite core is a unitary core flexible enough to be wound on a transportation wheel.

WO-A-2005/040017 relates to an aluminium conductor composite core reinforced cable and method of manufacture. An ACCC cable has a composite core surrounded by an outer film and at least one layer of aluminium conductor. The composite core comprises a plurality of fibers from at least one fiber type in one or more matrix materials.

GB-A-2,208,504 describes a method for producing a filament wound body from a fiber tow which includes a solvated condensation resin, the steps of: removing at a first temperature at least a portion of solvent in the solvated resin; at least partially but not fully reacting the resin and removing condensation products at a second temperature higher than the first temperature; and then, winding the tow while heating the tow at a third temperature at least at the second temperature.

EP-A-455,149 is directed to a method of preparing a flexible, drapeable towpreg containing fused thermoplastic particles by spraying a dispersion of thermoplastic particles onto a spread tow, fusing the thermoplastic particles onto the filaments at elevated temperature, and reconsolidating the spread tow into towpreg.

US-A-3,917,774 is directed to a process for preparing an elongated foamed resin article reinforced by continuous fibers.

The composite core of ACCC cable is generally made by a pultrusion process, a continuous process in which fiber reinforcement is first pulled through a resin impregnation area to coat the reinforcement with resin, then through pre-form plates to begin to shape the fiber/resin bundle, and finally through a heated die to cure the resin. Due to the continuous nature of the pultrusion process, composites of any desired length can be produced. The pultrusion process can be used to fabricate profiles with simple or complex geometry; however, the part will have a constant cross-sectional area over its entire length.

The existing pultrusion methods normally involve passing fibers through a resin bath or tank in order to achieve a good fiber wet out. This wet out step or method has a number of disadvantages including that it is very time intensive, and it builds high hydrostatic pressure at the entrance of the die (which, in turn, results in high pulling forces over the length of the process). These disadvantages are magnified in applications, e.g., ACCC cable, in which the volume content of fiber in the composite core is relatively high (e.g., >65%) due to the strength requirements of the composite. This high fiber volume content, in combination with other factors, greatly slows the wet out and pulling steps of the process, which in turn slows the over-all speed of the process. As a result, a typical maximum speed of a pultrusion process for making the composite core of ACCC cable is less than 2.4 meters per minute (8ft/min).

### BRIEF SUMMARY OF THE INVENTION

In one embodiment, the invention as defined in claim 1, is an improved wet-out step or method in a conventional pultrusion process. In this embodiment, the curable, thermoset resin is not applied to the fiber by pulling the fiber through a bath or tank of resin. Rather, the resin is applied to the fiber as a high-pressure spray. The spray is delivered from high-pressure spray nozzles which may or may not be heated. These nozzles allow for the application of a controlled amount of resin to the fiber, and they deliver the resin in a manner that promotes resin penetration into the fiber. Preferred embodiments of the invention are defined in the dependent claims.

In another embodiment of the invention, the filaments that comprise the fiber (or if a tow, the fibers that comprise the tow) are spread apart prior to the application of the resin to the fiber (either as a high-pressure spray or by conventional dipping in a resin bath). This spreading of the fiber filaments or tow fibers can maximize the area of filament or fiber surface that receives resin from the nozzles (if a tow is spread out into its constituent fibers, then the high-pressure also maximizes the penetration of the resin into the entangled filaments of the constituent fbers). The combination of filament spread and high-pressure spray can greatly reduce the time to complete the wet-out step. Moreover, due to the application of a controlled amount of resin to the fiber, e.g., avoiding the excess resin on the fiber that results from pulling the fiber through a bath or tank, the hydrostatic pressure at the die head is reduced. This, too, contributes to a faster and more energy efficient overail pultrusion process.

In another embodiment of the invention, fiber is brought to its near net-shape by passing it through a series of the fiber pre-forms (also known as pre-form plates or cards). After the filaments of the fiber are impregnated with the resin, the filaments are rebundled by passing the fiber through one or more pre-forms which first rebundle them into the fiber, and then begin to shape the fiber into its desired final net shape. Each pre-form brings the fiber closer to its desired final net shape and by the time the fiber reaches the entry to the final die (which also serves as a cure station), it is very close to its final desired shape. This sequence of pre-forms greatly reduces the hydrostatic pressure at the final die entry, and this in turn allows for a smaller, i.e., shorter, final die and a faster overall process.

In another embodiment of the invention, the shape of the die entrance and overall length of the die (cure station) is designed to minimize the hydrostatic pressure at the die head and the time necessary to the cure the resin that is impregnated into and onto the fiber. The final die imparts the final net shape to the fiber, and the cure of the resin in and on the fiber is at least initiated, if not completed, as the resin-impregnated fiber passes through and exits the die (some post-die cure may or may not occur depending a number of factors including the nature of the resin and cure package, the cure conditions in the final die, the cure conditions during collection and storage of the cable, etc.). Using standard design tools, e.g., finite element analysis (FEA), the entrance to the die is designed to minimize hydrostatic pressure. Moreover, the length of the die is designed to minimize the time necessary for the fiber to pass through it and still affect sufficient cure of the resin such that the fiber can be collected and stored, or subjected to further processing.

The combination of these improvements to the overali pultrusion process allows for the time to fabricate a composite core for use in ACCC cable to increase to 4.6 - 6.1m/min (15-20ft/min) Moreover, it allows for a more efficient use of resin, lowers the energy necessary for the pulling the fiber through the process (and thus lowers the energy costs of the process), and allows for the use of smaller equipment (and thus lowers the capital cost of the overall process).

### BRIEF DESCRIPTION OF THE DRAWINGS

Figure 1 is a schematic drawing of a conventional pultrusion process.

Figure 2 is a schematic drawing of one embodiment of the improved wet-out step of this invention which employs both a high-pressure spray nozzle and a filament spreader.

### DETAILED DESCRIPTION OF THE PREFERRED EMBODIMENT

The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, equipment dimensions, process parameters, etc., is from 100 to 1,000, it is intended that all individual values, such as 100, 101, 102, etc., and sub ranges, such as 100 to 144, 155 to 170, 197 to 200, etc., are expressly enumerated. For ranges containing values which are less than one or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, process parameters, equipment dimensions and component concentrations in resin formulations.

"Comprising", "including", "having" and like terms are not intended to exclude the presence of any additional component, step or procedure, whether or not the same is specifically disclosed. In order to avoid any doubt, all processes claimed through use of the term "comprising" may include one or more additional steps, pieces of equipment or component parts, and/or materials unless stated to the contrary. In contrast, the term, "consisting essentially of excludes from the scope of any succeeding recitation any other component, step or procedure, excepting those that are not essential to operability. The term "consisting of excludes any component, step or procedure not specifically delineated or listed. The term "or", unless stated otherwise, refers to the listed members individually as well as in any combination.

"Tow", "fiber tow", "roving", "sliver" and like terms mean an elongated column of entangled fibers having a generally rounded cross-section.

"Fiber" and like terms mean an elongated column of entangled filament having a generally round cross-section and a length to diameter ratio greater than 10.

"Filament" and like terms mean a single, continuous strand of elongated material having a length to diameter ratio of greater than 10.

"Net-shape", "final net-shape" and similar terms mean the size and shape of the cable after it leaves the final die and cure station. The net-shape of cable is measured in terms of its diameter and cross-sectional configuration.

In the figures, various items of equipment such as electrical or pneumatic connections, fittings and the like have been selectively omitted so as to simplify the drawings. Additionally, like reference numerals are used to indicate like components throughout the drawings.

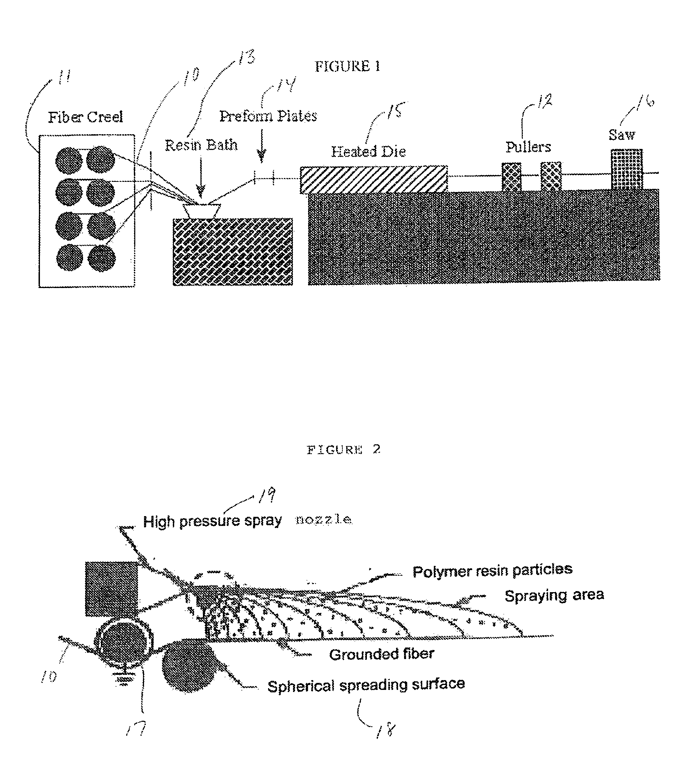

Figure 1 its a schematic drawing of a conventional, continuous pultrusion process. Although the process is described in terms of impregnating fiber with resin, the description also applies to a process for impregnating a tow with resin.

Fibers 10 stored on a plurality of spools 11 are pulled by puliers 12 through resin bath 13 of liquid resin in which the fibers are impregnated with resin. The impregnated fibers are pulled from the bath and through a series of pre-form plates 14, are combined with one another into a shape that resembles the desired final net shape of the final product. As the fiber passes through each pre-form plate, excess resin is removed and the fiber continues to approach its desired final net shape. Eventually, the fiber enters final die 15, typically a heated die, in which it receives its final net shape and the resin is subjected to cure conditions, these conditions dependent upon, among other things, the nature and amount of resin, the distribution of the resin over and throughout the fiber, the residence time of the fiber within the final die, and the like. The resin-impregnated, cured or partially cured fiber is then cut by saw 16 or any other cutting device into its desired length.

In the conventional pultrusion process and as illustrated in Figure 1, the resin is applied to the fiber by passing the fiber through a bath or tank holding the resin. The degree to which the fiber is impregnated with the resin is a function of a number of different variables including such things as the residence time of the fiber in the bath, the surface area of fiber exposed to the resin, the temperature of the resin bath, the composition of the fiber and resin and their compatibility with one another, and the like. Typically, these conditions require that the fiber cannot pass through the resin bath quickly. Moreover, this technique almost always results in excess resin clinging to the fiber after the fiber exits the resin bath, and this excess resin must eventually be stripped or otherwise removed from the fiber as it passes through the pre-forms and final die. Not only does this result in wasted resin, but it builds pressure at the head of the pre-form plates and/or final die, and this too detracts from the overall energy efficiency and speed of the process.

Figure 2 illustrates one embodiment of the improved wet-out process of this invention. As fiber 10 comes off a let-off service rack or creel (not shown), they pass over a centering guide pulley (not shown), under grounding pulley 17 and over spreader roll 18. The centering guide pulley is typically grooved so as to constrain the lateral movement of the fiber as it passes under the grounding pulley and onto the spreader roll. The grounding pulley flattens and stably positions the fiber above the center of the spreader roll.

Spreader roll 18, or geodesic fiber spreader, is typically a sphere with a hard, smooth surface to minimize fiber abrasion and resist wear. As the fiber passes over the surface of the spreader, the individual filaments of the fiber will tend to follow the path of shortest length from the centering pulley to the first pre-form plate. This tendency spreads the individual filaments out and apart from one another and this, in turn, maximizes the fiber surface area that is available to be sprayed with resin.

Other equipment (not shown) can be employed to facilitate the operation of the wet-out step. For example, a braking system can be installed on the let-off service rack so that tension can be applied to the fibers. Additional grounding pulleys can also be installed to improve the spreading process. If desired, a metal comb (preferably with a ceramic coating) can be installed after the spreader roll so that as the filaments leave the surface of the spreader roll, their spread relative to one another can be maintained or increased so as to facilitate their impregnation with resin.

Once spread, the filaments are impregnated with resin from one or more high-pressure spray nozzles 19. Such nozzles are commercially available in many sizes and designs, and the ¼ JAU variable spray air atomizing nozzles with heat jacket manufactured by Spray Systems are representative. The nozzles can be fixed or mobile relative to the fiber, and they can be positioned or moved in any direction relative to the fiber. Typically, the nozzles are mobile and travel in the traverse direction of the fiber movement through the equipment train, and they spray resin directly onto the fiber surface. The high pressure, e.g., 1.38 x 10⁶ to 20.7 x 10⁶ Pa (200 to 3,000 pounds per square inch (psi)), in the spray helps resin flow in-between the filaments and achieve a good wet out rapidly. The spraying heads can be installed in series and/or on both sides of and/or above and under the fibers. The traveling speed of the spraying heads and their spraying velocity and flow are controlled in such a manner so as to minimize resin waste. The spraying mechanics of the method, e.g., the size of the spray area, the shape of the spray pattern, the size of the resin particles, the distance between the spray nozzle and the filaments, and the like can vary to convenience and optimization of the process. The resin and its curing agent can be mixed prior to the coating process, or they can be mixed right at the mixing head depending on the pot life of the resin system. If desirable, the spray nozzles can have a heating capability to reduce the viscosity of the resin and improve the spraying process.

After the filaments have been impregnated with the resin, they are passed through a series (typically three or more) of pre-form plates or cards in which they are rebundled and shaped near to their final net shape. The pre-forms also help achieve further wet out of the fibers through close contact and macro movement of fibers. Eventually, the impregnated fiber arrives at the entrance of the final die and cure station. The entrance to the die is designed to receive a fiber that is near its final net shape and as such, the hydrostatic pressure at the die head is minimized. The length of the die is designed for optimal cure of the resin based on the nature of the resin, curing system and conditions of cure. Typically the resin is cured by exposure to heat, but other forms of cure energy, e.g., UV or e-beam radiation, can also be employed. If necessary, an in-line post-cure oven (not shown) can be added to perform post curing of the composite before the final state of the product is achieved.

The composition and structure of the fiber, and the composition of the resin and its cure system, if any, can vary widely, and all are typically consistent with that used in the conventional manufacture of ACCC cable. Representative fibers include Toho Teneax G30-700 24K HTA-7D F402 and T700SC-24K-50C carbon fiber. Representative curable, thermoset resins include DER 383 epoxy resin available from The Dow Chemical Company. Representative cure agents include Ancamine DL 50. Other representative fibers, resins and cure agents are described in USP 7,015,395 and 7,060,326. Representative compositions of final impregnated fiber include an impregnated fiber comprising 78-85 weight percent (wt%) carbon fiber and 15-23 wt% resin. The resin can comprise 77 wt% DER 383, 21 wt% Ancamine DL-50, and 2 wt% of a release agent.

## Claims

1. A process for making a resin-impregnated tow or fiber, the tow comprising constituent fibers and the fiber comprising constituent filaments, the process comprising the steps of:
A: spreading the tow or fiber into its constituent fibers or filaments by passing the tow or fiber under tension over a geodesic fiber spreader (18); and
B: applying the resin as a high-pressure spray to the spread out fibers or filaments in which the resin is applied to the spread out fibers or filaments at a pressure between 1.38x10⁶ and 20.7x10⁶ Pa (200 and 3,000 psi).

2. The process of claim 1 in which the spread out fibers or filaments are passed through a comb prior to contact with the resin from the high pressure spray.

3. The process of claim 1 in which the resin is an epoxy resin.

4. A process of making a composite core for an ACCC cable, comprising the process of making a reinforcing tow or fiber as defined in claim 1, wherein a curable, thermoset resin is applied to the reinforcing tow or fiber.

5. The process of claim 4 in which the resin is an epoxy resin.

6. The process of claim 5 in which the spread out fibers or filaments are passed through a comb prior to contact with the resin from the high pressure spray.

## Patentansprüche

1. Ein Verfahren zum Herstellen eines harzimprägnierten Strangs oder einer harzimprägnierten Faser, wobei der Strang konstitutive Fasern beinhaltet und die Faser konstitutive Filamente beinhaltet, wobei das Verfahren die folgenden Schritte beinhaltet:
A: Spreizen des Strangs oder der Faser in seine/ihre konstitutiven Fasern oder Filamente, indem der Strang oder die Faser unter Spannung über einen geodätischen Faserspreizer (18) geführt wird; und
B: Aufbringen des Harzes als Hochdruckspray auf die auseinander gespreizten Fasern oder Filamente, wobei das Harz mit einem Druck von zwischen 1,38 x 10⁶ und 20,7 x 10⁶ Pa (200 und 3000 psi) auf die auseinander gespreizten Fasern oder Filamente aufgebracht wird.

2. Verfahren gemäß Anspruch 1, wobei die auseinander gespreizten Fasern oder Filamente vor dem Kontakt mit dem Harz aus dem Hochdruckspray durch einen Kamm geführt werden.

3. Verfahren gemäß Anspruch 1, wobei das Harz ein Epoxidharz ist.

4. Ein Verfahren zum Herstellen eines Verbundkerns für ein ACCC-Kabel, das das Verfahren zum Herstellen eines verstärkenden Strangs oder einer verstärkenden Faser, wie in Anspruch 1 definiert, beinhaltet, wobei ein härtbares, duroplastisches Harz auf den verstärkenden Strang oder die verstärkende Faser aufgebracht wird.

5. Verfahren gemäß Anspruch 4, wobei das Harz ein Epoxidharz ist.

6. Verfahren gemäß Anspruch 5, wobei die auseinander gespreizten Fasern oder Filamente vor dem Kontakt mit dem Harz aus dem Hochdruckspray durch einen Kamm geführt werden.

## Revendications

1. Un procédé pour réaliser une mèche ou une fibre imprégnée de résine, la mèche comprenant des fibres constitutives et la fibre comprenant des filaments constitutifs, le procédé comprenant les étapes consistant à :
A : étaler la mèche ou la fibre pour en séparer les fibres constitutives ou les filaments constitutifs en faisant passer la mèche ou la fibre sous tension sur un étaleur de fibres géodésique (18) ; et
B : appliquer la résine en pulvérisation à haute pression sur les fibres ou les filaments étalés, la résine étant appliquée sur les fibres ou les filaments étalés à une pression comprise entre 1,38x10⁶ et 20,7x10⁶ Pa (200 et 3 000 psi)

2. Le procédé de la revendication 1 dans lequel les fibres ou les filaments étalés sont passés à travers un peigne avant d'entrer en contact avec la résine provenant du pulvérisateur à haute pression.

3. Le procédé de la revendication 1 dans lequel la résine est une résine époxyde.

4. Un procédé pour réaliser une âme composite pour un câble ACCC, comprenant le procédé consistant à réaliser une mèche ou une fibre de renforcement tel que défini dans la revendication 1, dans lequel une résine durcissable, thermoplastique est appliquée sur la mèche ou la fibre de renforcement.

5. Le procédé de la revendication 4 dans lequel la résine est une résine époxyde.

6. Le procédé de la revendication 5 dans lequel les fibres ou les filaments étalés sont passés à travers un peigne avant d'entrer en contact avec la résine provenant du pulvérisateur à haute pression.
